# FASCICULE DE BREVET EUROPEEN

(11) **EP 1 838 593 B1**
(45) Date de publication et mention de la délivrance du brevet: **15.06.2011**
(21) Numéro de dépôt: 06700279.0
(22) Date de dépôt: 04.01.2006
(51) Int. Cl.: B65D 63/10, A01G 17/08

(54) **ENSEMBLE COHERENT D'ELEMENTS ELASTIQUES DE FIXATION**
KOHÄRENTE ANORDNUNG VON ELASTISCHEN BEFESTIGUNGSELEMENTEN
COHERENT ARRANGEMENT OF ELASTIC FIXING ELEMENTS

(30) Priorité: 18.01.2005 FR 0500513
(43) Date de publication de la demande: 03.10.2007
(73) Titulaire: Ghent-Supply, 9810 Eke-Nazareth (BE)
(72) Inventeur: BOSMANS, Frank, B-9810 Eke (BE); BOSMANS, Jan, B-9120 Melsele (BE)
(74) Mandataire: Hennion, Jean-Claude
(86) Numéro de dépôt international: PCT/EP2006/000028
(87) Numéro de publication internationale: WO 2006/077011

(56) Documents cités:
- US-A- 2 943 371
- US-A- 3 048 906
- US-A- 3 673 639
- US-A- 5 081 746
- US-A- 5 893 456
- US-A- 6 044 526

## Description

La présente invention a pour objet un ensemble cohérent de plusieurs éléments élastiques de fixation selon le préambule de la revendication 1. Un tel ensemble est connu du document US 5 893 456. Ces éléments élastiques de fixation sont destinés notamment à maintenir ensemble un premier et un deuxième éléments notamment rectilignes, tels qu'un sarment de vigne et un fil métallique support. L'invention trouve donc en particulier son application dans la fixation de branches telles que des sarments de vigne à un support tel qu'un fil métallique.

Généralement, dans le jardinage comme dans la viticulture, on cherche à guider la croissance d'une plante le long d'un support, par exemple un cordon, un tuteur, une corde, un fil métallique ou autre. Ce support, le long duquel est fixée la plante, peut être rectiligne ou curviligne, horizontal ou vertical, et permet donc d'accompagner la croissance de la plante. Il est donc nécessaire de maintenir la plante attachée à ce support en un ou plusieurs endroits.

La plupart des procédés et systèmes de fixation connus consistent en une ligature ou un serrage de la plante sur son support. Ce type de procédé et de système de fixation présentent toujours un risque d'endommagement de la plante, ou bien, à l'inverse, de serrage insuffisamment efficace.

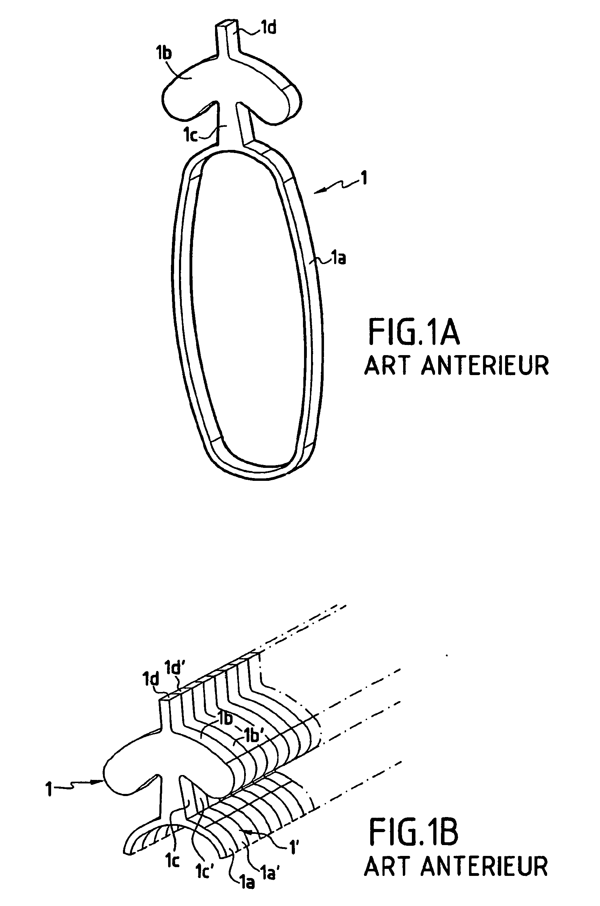

On connaît par ailleurs des éléments élastiques qui présentent l'avantage de réduire les risques d'endommagement de la plante tout en assurant une fixation efficace au support. On peut citer en particulier l'élément élastique et l'ensemble cohérent de plusieurs de ces éléments élastiques décrits dans le brevet américain US 5 893 456, détenu par la demanderesse, et repris dans la présente demande au titre de l'art antérieur, en référence aux figures 1 a et 1b.

Un tel élément élastique 1 de fixation comprend une boucle fermée 1 a. Une tête 1b, est reliée à la boucle fermée 1a par un cou 1c, et prolongée par une excroissance supérieure 1d.

Cet élément élastique 1 permet la fixation d'un premier élément tel qu'un sarment de vigne sur un deuxième élément tel qu'un fil métallique support, par encerclement de l'élément élastique 1 étiré autour du sarment et du fil métallique. Cet encerclement est ensuite fermé en contraignant, par déformation, la tête 1b à passer dans la boucle fermée 1 a. Après relâchement de l'élément élastique 1 vers un état non étiré, la tête 1b proéminente empêche que la fixation ne se rouvre, puisque les parties latérales proéminentes de cette tête 1b sont bloquées dans la boucle fermée 1 a. Cette tête 1 b joue donc le rôle d'ancre.

Par ailleurs, il est souhaitable de disposer d'un ensemble cohérent d'éléments élastiques 1,1', tel que présenté à la figure 1b, qui permet de transporter plusieurs éléments élastiques en réduisant le risque d'en perdre. Ces éléments élastiques 1,1' possèdent évidemment la même structure que l'élément élastique 1 de la figure 1a. Ils sont relié entre eux par une unique liaison au niveau de leurs excroissances 1d,1d' respectives, avec une prédécoupe dans cette liaison qui la rend partielle. Ainsi, pour poser un élément élastique 1, il suffit de le séparer de l'ensemble cohérent par déchirement.

Cependant, la pose de ces éléments élastiques est fastidieuse et parfois pénible. Les conditions de pose, en extérieur, sur des surfaces de culture et dans des quantités importantes, notamment dans le cas de la viticulture, sont en effet telles qu'il faut un temps considérable pour poser ce type d'éléments élastiques.

Ces éléments élastiques, s'ils sont suffisamment et durablement résistants, sont également, en contrepartie, difficiles à poser à la main compte tenu de la force non négligeable nécessaire pour les étirer lors de la mise en place, ce qui rend pénible ce geste répétitif de mise en place.

De plus, au cours de la croissance de la plante, il faut parfois, soit déplacer l'élément élastique, soit en ajouter un nouveau, ce qui oblige donc à réitérer régulièrement la mise en oeuvre du procédé de pose de ces éléments élastiques.

La pose de ces éléments élastiques 1 à la main est d'autant plus difficile que l'étape qui consiste à faire pénétrer la tête proéminente (1d) dans la boucle fermée (1a) est rendue délicate par le fait que l'utilisateur se sert de la boucle fermée (1a) pour étirer l'élément élastique 1. Tant que la tête 1 d n'est pas passée dans la boucle fermée 1a, l'élément élastique 1 doit être maintenu étiré. Or, la main de l'utilisateur tirant sur la boucle fermée 1a gêne le passage de la tête 1 d dans cette boucle fermée 1 a.

Par ailleurs, la pose automatique de ces éléments élastiques 1,1' est rendue difficile à partir de l'ensemble cohérent décrit à la figure 1 b.

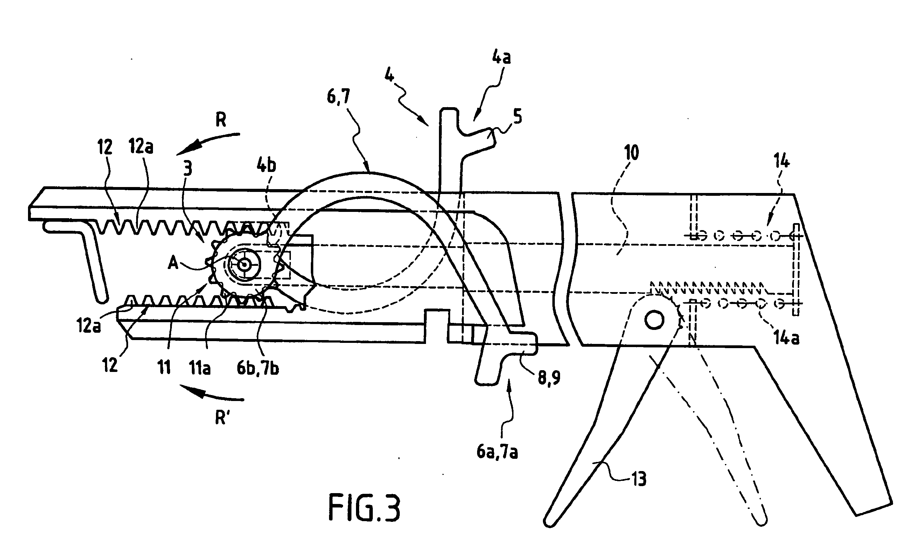

On utilise en effet un dispositif de pose, tel que décrit dans les figures 3 à 7 qui seront détaillées plus loin.

Ce dispositif comprend un bras supérieur pourvu, en une de ses extrémités, d'un moyen d'accrochage d'une portion supérieure de la boucle fermée de l'élément élastique, le bras supérieur étant monté, par son autre extrémité, pivotant autour d'un axe. Ce dispositif comprend également deux bras inférieurs chacun pourvu, en une de ses extrémités, d'un moyen d'accrochage d'une portion inférieure de la boucle fermée de l'élément élastique, les bras inférieurs étant montés, chacun par son autre extrémité, pivotant autour du même axe. Le dispositif comprend en outre des moyens de mise en rotation, autour de l'axe, du bras supérieur dans un premier sens de rotation et des bras inférieurs dans le sens de rotation du premier sens de rotation, à partir d'une première position de chargement jusqu'à une deuxième position de pose de l'élément élastique.

Ainsi, dans une première partie de la rotation, l'extrémité du bras supérieur d'une part, et les extrémités des bras inférieurs d'autre part, s'écartent les unes de l'autre. Puis, dans une deuxième partie de la rotation, ces extrémités se rapprochent les unes de l'autre jusqu'à ce que l'extrémité du bras supérieur passe entre les extrémités des bras inférieurs.

Eventuellement, les moyens de mise en rotation comprennent une tige longitudinale déplaçable en translation entre une première position arrière de chargement de l'élément élastique et une deuxième position avant de pose de l'élément élastique, des moyens de mise en translation de la tige longitudinale, et des moyens de transformation du mouvement de translation de la tige longitudinale en la rotation des bras supérieurs et inférieurs autour de l'axe de rotation.

Les moyens de transformation du mouvement de translation de la tige longitudinale en la rotation des bras supérieurs et inférieurs autour de l'axe de rotation, peuvent comprendre un élément circulaire denté fixé à l'extrémité avant de la tige longitudinale, libre en rotation autour de l'axe de rotation des bras supérieur et inférieurs, et qui réalise la liaison entre ces bras et la tige longitudinale, et un élément crémaillère dont les dents coopèrent avec les dents de l'élément circulaire denté.

Ainsi, un mouvement de translation de la tige longitudinale génère la rotation de l'élément circulaire denté autour de l'axe de rotation des bras supérieur et inférieurs. Cette rotation génère à son tour la rotation, autour de ce même axe, du bras supérieur dans un sens de rotation et des bras inférieurs dans le sens de rotation inverse de ce sens de rotation.

Eventuellement, les moyens de mise en translation de la tige longitudinale comprennent une gâchette et/ou un vérin.

Ce dispositif de pose peut comprendre également des moyens de retour automatique des bras supérieur et inférieurs dans la première position de chargement de l'élément élastique.

Ces moyens de retour automatique des bras supérieur et inférieurs dans la première position de chargement de l'élément élastique, comprennent par exemple un ressort. Ce ressort s'oppose à la translation de la tige longitudinale de la première position de chargement à la deuxième position de pose de l'élément élastique.

Eventuellement, les bras supérieur et inférieurs sont courbés, et/ou les bras inférieurs sont identiques et parallèles.

De préférence, la distance entre l'extrémité du bras supérieur et l'axe de rotation est inférieure à la distance entre les extrémités respectives des bras inférieurs et cet axe.

De préférence également, l'un au moins des moyens d'accrochage d'une portion de la boucle fermée de l'élément élastique, est un ergot formant un « V » ou un « U » avec l'extrémité du bras inférieur ou supérieur sur laquelle il se trouve.

Ce dispositif de pose peut en outre comprendre un magasin de chargement automatique de l'élément élastique.

Or, la pose automatique de ces éléments élastiques 1,1' à partir de l'ensemble cohérent décrit à la figure 1b, par l'intermédiaire du dispositif de pose décrit ci-dessus, est délicate. En effet, lors du chargement d'un élément élastique 1,1' sur ce dispositif de pose à partir de l'ensemble cohérent décrit précédemment, le bras supérieur vient saisir, par l'intermédiaire de son ergot final, l'élément élastique 1 dans la partie supérieure de la boucle fermée 1 a. D'autre part, les deux bras inférieurs viennent saisir, par l'intermédiaire de leurs ergots respectifs, l'élément élastique 1 dans la partie inférieure de la boucle fermée 1 a. Puis, la mise en rotation des bras inférieurs et supérieur permet de désolidariser l'élément élastique 1 de l'ensemble cohérent par arrachage au niveau de l'excroissance 1d.

Mais, les éléments élastiques 1,1' n'étant pas liés entre eux au niveau de la partie inférieure de la boucle fermée 1 a, celle-ci a tendance à flotter puisqu'elle est laissée libre, si bien que l'accrochage de cette partie inférieure de la boucle fermée 1a par les ergots des bras inférieurs du dispositif de pose risque de ne pas être efficace, la prise de ces ergots dans la boucle fermée n'étant pas fiable.

Par ailleurs, on ne peut lier ne serait-ce qu'une petite partie de la portion inférieure de la boucle fermée 1a d'un élément élastique 1 avec l'élément élastique 1' contigu, car l'arrachage risquerait d'endommager cette boucle fermée 1a, rendant l'élément élastique inutilisable.

La pose manuelle de ces éléments élastiques 1, comme expliqué plus haut, et la pose automatique à partir d'un ensemble cohérent d'élément élastique tel que celui décrit à la figure 1b à l'intermédiaire d'un dispositif de pose tel que décrit ci-dessus, présentent donc un certain nombre d'inconvénients mentionnés ci-dessus.

Il existe donc un besoin d'un élément élastique de fixation ainsi que d'un ensemble cohérent de tels éléments élastiques de fixation, qui permettent de pallier les inconvénients précités. En particulier, il existe un besoin d'un élément élastique de fixation et d'un ensemble cohérent de tels éléments élastiques de fixation qui facilitent tant la pose manuelle que la pose automatique, sans risque d'endommagement de l'élément élastique.

Ainsi, c'est l'objet de la présente invention que de pallier les inconvénients précités en proposant un ensemble cohérent d'éléments élastiques, qui d'une part facilitent la pose manuelle en permettant d'étirer facilement l'élément élastique autour d'un élément notamment rectiligne à encercler, puis d'encercler celui-ci jusqu'à fermeture en relâchant l'étirement sur l'élément élastique après insertion de la tête proéminente dans la boucle fermée de l'élément élastique, et d'autre part facilitent la pose automatique en permettant aux bras d'un dispositif de pose d'accrocher de façon efficace l'élément élastique à partir d'un ensemble cohérent pour l'arracher à celui-ci et ensuite le mettre en place.

L'invention se rapporte à un ensemble cohérent comprenant au moins deux éléments élastiques de fixation selon la revendication 1. Ces éléments élastiques sont reliés entre eux par une première liaison au niveau de leurs excroissances supérieures respectives, leurs boucles fermées, leurs têtes et leurs cous respectifs n'étant pas reliés entre eux.

Les éléments élastiques sont reliés entre eux par une deuxième liaison au niveau de leurs excroissances inférieures respectives.

Ainsi, les éléments élastiques étant reliés entre eux également au niveau de l'excroissance inférieure qui prolonge la boucle fermée, celle-ci n'a plus tendance à flotter puisqu'elle n'est pas laissée libre, si bien que l'accrochage de cette partie inférieure de la boucle fermée par les ergots des bras inférieurs d'un dispositif de pose, est rendu plus efficace, la prise de ces ergots dans la boucle fermée étant plus fiable.

Par ailleurs, l'arrachage se fait sans risque d'endommagement de la boucle fermée.

De préférence, au moins une des première et deuxième liaisons est une liaison partielle.

Cette liaison partielle peut être rendue partielle par l'intermédiaire par exemple d'une prédécoupe, de façon à faciliter encore plus la séparation ultérieure des éléments élastiques par déchirement au niveau de cette liaison partielle.

D'autres caractéristiques et avantages de l'invention apparaîtront plus clairement et de manière complète à la lecture de la description ci-après des variantes préférées de réalisation du dispositif et de mise en oeuvre du procédé, lesquelles sont données à titre d'exemples non limitatifs et en référence aux dessins annexés suivants.
- figure 1 a : représente schématiquement un élément élastique de fixation de l'art antérieur,
- figure 1b : représente schématiquement un ensemble cohérent d'éléments élastiques de fixation de l'art antérieur,
- figure 2a : représente schématiquement un élément élastique de fixation utilisé dans le cadre de invention,
- figure 2b : représente schématiquement un ensemble cohérent d'éléments élastiques de fixation selon l'invention,
- figures 3 à 7 : représentent schématiquement un dispositif de pose d'un élément élastique de fixation utilisé dans le cadre de l'invention à différentes étapes du processus de pose.

Les figures 1a et 1b représentent schématiquement et respectivement un élément élastique de fixation et un ensemble cohérent de tels éléments élastiques de l'art antérieur, et ont été décrites précédemment.

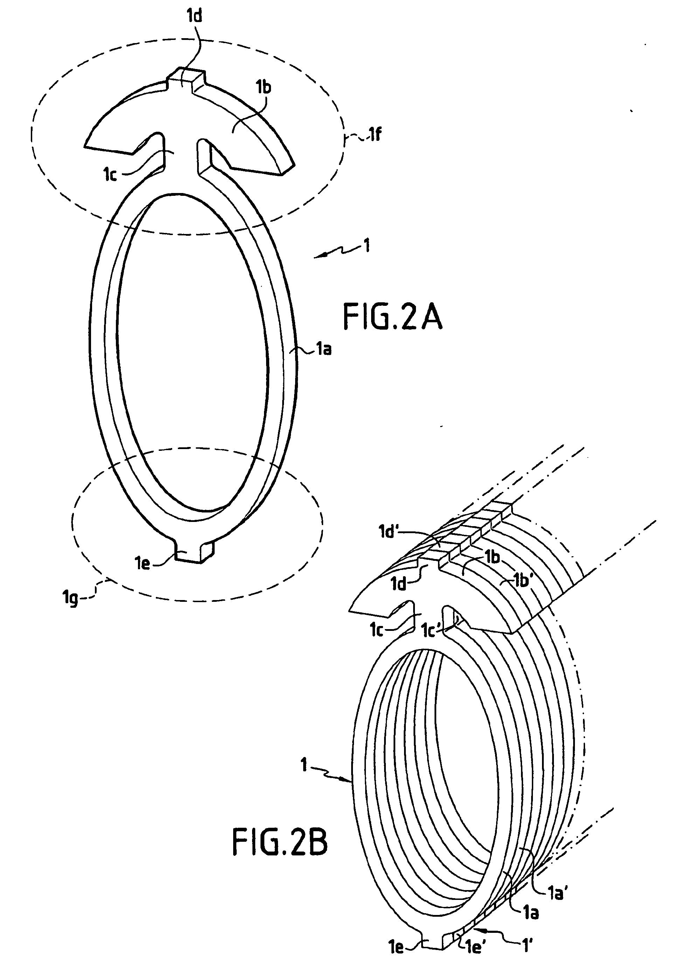

La figure 2a représente schématiquement un élément élastique de fixation utilisé dans le cadre de l'invention.

L'élément élastique 1 comprend une boucle fermée 1a, une tête 1b, et un cou 1c reliant la tête 1b à la boucle fermée 1 a. La tête 1b est prolongée par une excroissance supérieure 1d.

La boucle fermée 1a est prolongée par une excroissance inférieure 1e. Celle-ci est de préférence diamétralement opposée à l'excroissance supérieure 1 d.

L'élément élastique 1 et bien sûr en matériau à propriétés élastiques comme par exemple du caoutchouc.

Cet élément élastique 1 permet donc la fixation notamment d'un sarment de vigne sur un fil métallique support, par encerclement de l'élément élastique 1 étiré autour du sarment et du fil métallique. L'encerclement est ensuite fermé en contraignant, par déformation, la tête 1 b à passer dans la boucle fermée 1 a. Après un relâchement de l'élément élastique 1 vers un état non étiré, la tête 1b, qui est proéminente et qui joue le rôle d'ancre, empêche que la fixation de se rouvre puisque les parties latérales proéminentes de cette tête 1b sont bloquées dans la boucle fermée 1 a.

La pose manuelle d'un tel élément élastique de fixation 1 est avantageusement réalisable grâce à la présence de l'excroissance inférieure 1e. En effet, elle permet à l'utilisateur d'étirer l'élément élastique 1 sans avoir à tirer directement sur la boucle fermée 1 a. L'utilisateur ayant saisi l'élément élastique 1 d'une part par l'excroissance supérieure 1d et d'autre part par l'excroissance inférieure 1e, il peut plus facilement étirer l'élément élastique 1 et encercler le sarment de vigne et le fil métallique. Ensuite, puisqu'il n'a pas saisi directement la boucle fermée 1a et qu'il ne gêne donc pas le passage dans celle-ci, il peut plus facilement faire pénétrer, par déformation, la tête 1 b dans cette boucle fermée 1 a.

La figure 2b représente schématiquement un ensemble cohérent d'éléments élastiques de fixation selon l'invention.

Cet ensemble cohérent comprend au moins deux éléments élastiques de fixation 1 et 1' conformes à l'élément élastique de fixation 1 de la figure 2a.

Les éléments élastiques 1 et 1' sont reliés entre eux par une première liaison au niveau de leurs excroissances supérieures respectives 1 d et 1 d'. Par contre, leurs boucles fermées 1 a et 1a', leurs têtes 1 b et 1b', ainsi que leurs cous 1c et 1c' respectifs ne sont pas reliés entre eux et sont donc désolidarisés l'un ou l'une de l'autre.

Les éléments élastiques 1 et 1' sont reliés entre eux par une deuxième liaison au niveau de leurs excroissances inférieures respectives 1e et 1e'.

De préférence, l'une au moins de ces deux liaisons est une liaison partielle, de façon à faciliter la séparation des éléments élastiques 1 et 1'. Cette liaison partielle peut être obtenue par une prédécoupe, représentée sur la figure 2b par des traits pointillés entre les excroissances supérieures 1d et 1d' et entre les excroissances inférieures 1e et 1e'. Il peut s'agir par exemple d'une découpe latérale complète mais sur une partie seulement de la longueur des excroissances. Il peut s'agir encore d'une découpe longitudinale complète des excroissances mais latéralement incomplète.

Bien sûr, de préférence, l'ensemble cohérent de l'invention comprend un nombre d'éléments élastiques de fixation 1 et 1' supérieur à deux, qui sont alors reliés deux à deux tel qu'expliqué ci-dessus.

Cet ensemble cohérent peut par exemple être obtenu par extrusion dans un matériau élastique comme du caoutchouc. Les éléments élastiques 1 et 1' sont ensuite obtenus par des découpes latérales partielles qui laissent les excroissances supérieures et inférieures liées deux à deux tel qu'expliqué ci-dessus.

Ainsi, l'ensemble cohérent de l'invention permet avantageusement l'utilisation d'un dispositif de pose automatique qu'elle que décrit plus loin en référence aux figures 3 à 7. La présence des excroissances inférieures respectives permet en effet avantageusement la liaison inférieure des éléments élastiques constituant l'ensemble cohérent, nécessaire pour faciliter le chargement sur le dispositif de pose automatique, sans risque d'endommagement de la partie inférieure des boucles fermées au moment de la séparation ou désolidarisation des éléments élastiques.

Les figures 3 à 7 représentent schématiquement le dispositif de pose d'un élément élastique, à différentes étapes du procédé de pose.

La figure 3 représente schématiquement le dispositif de pose au repos, sans élément élastique chargé.

Le dispositif de pose comprend un bras supérieur 4, éventuellement courbé, et deux bras inférieur 8 et 9 éventuellement courbés, parallèles et identiques, qui sont donc confondus sur cette figure 3.

À l'extrémité 4a du bras supérieur 4 se trouve un ergot 5 qui forme avec cette extrémité 4a un « U » ou un « V », et qui est destiné à accrocher une portion supérieure de la boucle fermée d'un élément élastique. Aux extrémités respectives 6a et 7a des bras inférieurs 6 et 7 se trouvent respectivement les ergots 8 et 9, qui forment donc chacun avec ces extrémités respectives 6a et 7a un « U » ou un « V », et qui sont destinés à accrocher une portion inférieure de la boucle fermée d'un élément élastique.

Ces bras supérieur 4 et inférieurs 6 et 7 sont montés par leurs autres extrémités respectives 4b, 6b et 7b pivotant autour de l'axe A. La rotation de ces bras supérieur 4 et inférieurs 6 et 7 autour de l'axe A est obtenue par des moyens 3 de mise en rotation.

Ces moyens 3 de mise en rotation comprennent par exemple une tige longitudinale 10 qui est déplaçable en translation entre une première position arrière de chargement d'un élément élastique et une deuxième position avant de pose de cet élément élastique autour notamment d'un sarment de vigne et d'un fil métallique support. Le mouvement de translation de cette tige longitudinale 10 est transmis et transformé en la rotation des bras supérieur 4 et inférieurs 6 et 7 autour de l'axe A.

La transformation de ce mouvement de translation de la tige longitudinale 10 en la rotation des bras supérieur 4 et inférieurs 6 et 7 autour de l'axe A, est obtenue par exemple au moyen d'un élément circulaire denté tel qu'une roue dentée 11 dont les dents 11a coopèrent avec les dents 12a d'un élément de type crémaillère 12.

La route dentée 11, fixée à l'extrémité avant de la tige longitudinale 10, est libre en rotation autour de l'axe A et réalise la liaison entre les bras supérieur 4 et inférieurs 6 et 7 d'une part et la tige longitudinale 10 d'autre part.

Le mouvement de translation de la tige longitudinale 10 est déclenché par des moyens 13 de mise en translation tels qu'une gâchette à actionnement manuel ou encore un vérin automatique.

On peut prévoir l'utilisation de moyens 14 de retour automatique des bras supérieur 4 et inférieurs 6 et 7 dans la position initiale de chargement d'un élément élastique. Ces moyens comprennent par exemple un ressort 14a qui s'oppose à la translation de la tige longitudinale 10 de la première position de chargement à la deuxième position de pose d'un élément élastique.

Une gâchette 13 est ainsi représentée à la figure 3. Un mouvement de cette gâchette 13 vers l'arrière, grâce à une pression suffisante sur le ressort 14a, entraîne le déplacement de la tige longitudinale 10 en translation vers l'avant. Un mouvement de cette gâchette 13 vers l'avant, après le relâchement de la pression sur le ressort 14a, entraîne donc le déplacement de la tige longitudinale 10 en translation vers l'arrière.

Ainsi, les moyens 3 de mise en rotation décrits ci-dessus permettent de mettre en rotation, autour de l'axe A, le bras supérieur 4 dans un sens R, et les bras inférieurs 6 et 7 dans le sens R' inverse du sens R.

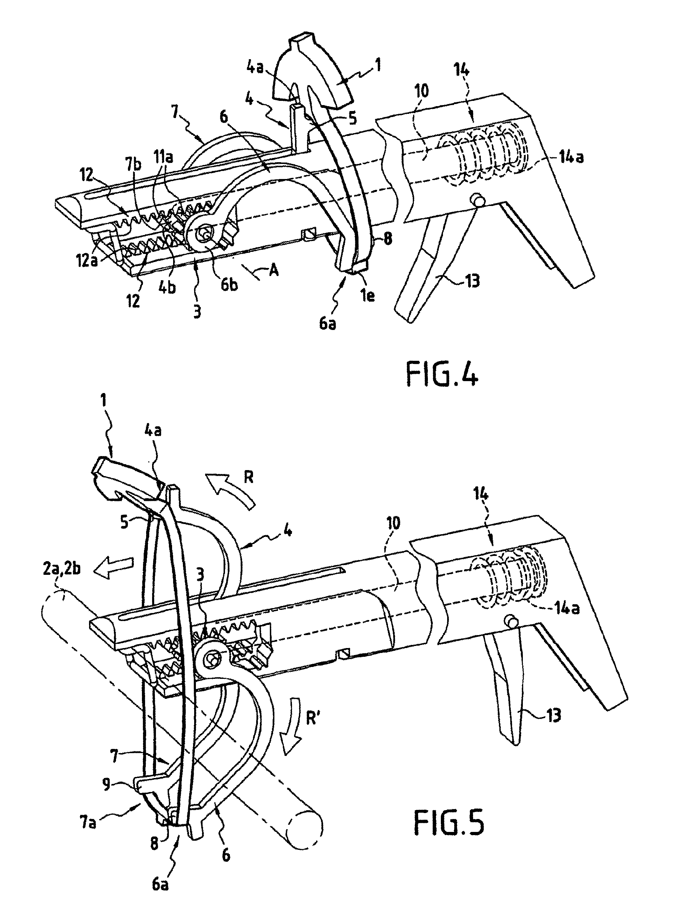

Comme on le verra plus en détail en référence aux figures 4 à 7, dans une première partie de la rotation, l'extrémité 4a du bras supérieur 4 d'une part, et les extrémités respectives 6a et 7a des bras inférieurs 6 et 7 d'autre part, s'écartent les unes de l'autre. Puis, dans une deuxième partie de la rotation, ces extrémités se rapprochent les unes de l'autre, jusqu'à ce que l'extrémité 4a du bras supérieur 4 passe entre les extrémités respectives 6a et 7a des bras inférieurs 6 et 7.

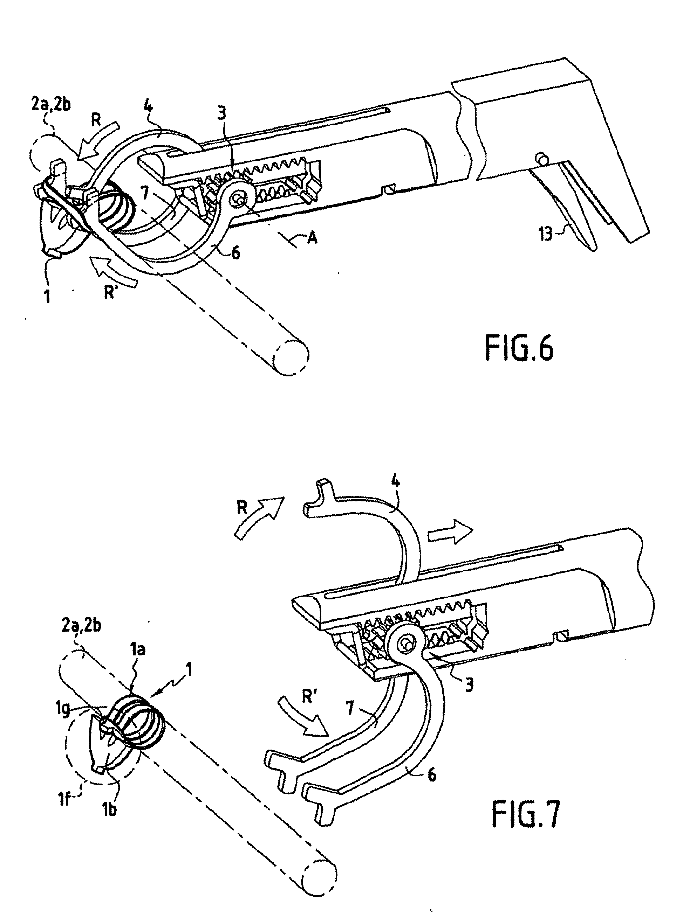

Comme on le verra également, en référence notamment à la figure 6, la distance entre l'extrémité 4a du bras supérieur 4 et l'axe A est de préférence inférieure à la distance entre les extrémités respectives 6a et 7a des bras inférieurs 6 et 7 et cet axe A, afin de permettre plus facilement le passage de la tête de l'élément élastique maintenue par le bras supérieur 4 dans la boucle fermée de l'élément élastique maintenue par les bras inférieurs 6 et 7.

À la figure 4, le dispositif de pose est représenté toujours en position de repos, mais avec un élément élastique 1 chargé.

Le chargement est effectué par l'accrochage de la portion supérieure de la boucle fermée de l'élément élastique 1 par l'intermédiaire de l'ergot 5 situé à l'extrémité 4a du bras supérieur 4, et par l'accrochage de la portion inférieure de la boucle fermée de l'élément élastique 1 par l'intermédiaire des ergots respectifs 8 et 9 (ce dernier étant caché) des extrémités 6a et 7a (cette dernière étant cachée) des bras inférieurs 6 et 7.

Eventuellement, le dispositif peut être pourvu d'un magasin de chargement (non représenté) dans lequel un ensemble cohérent d'éléments élastiques, tel que celui représenté à la figure 1b, est disposé, de façon à ce que les bras supérieur 4 et inférieurs 6 et 7 accrochent automatiquement un élément élastique 1 lorsqu'ils sont en position initiale de chargement.

A la figure 5, le dispositif de pose est représenté dans une position dans laquelle l'élément élastique 1 est présenté dans un état étiré devant l'ensemble 2a,2b schématisant par exemple un sarment 2a de vigne et un fil métallique support 2b (confondus sur la figure 5 pour simplifier).

Le passage de l'état du dispositif représenté à la figure 4 à l'état du dispositif représenté à la figure 5 est obtenu par la première partie de la rotation du bras supérieur 4 autour de l'axe A dans le sens R, et, simultanément, par la première partie de la rotation des bras inférieurs 6 et 7 autour de l'axe A dans le sens R' inverse du sens R.

C'est bien dans cette première partie de la rotation que l'extrémité 4a du bras supérieur 4 d'une part, et les extrémités respectives 6a et 7a des bras inférieurs 6 et 7 d'autre part, s'éloignent les unes de l'autre, jusqu'à ce que la distance entre eux ces extrémités soit maximale, de sorte d'étirer suffisamment l'élément élastique 1 entre sa portion supérieure et sa portion inférieure, qui est alors présenté devant l'élément 2a,2b a encercler.

Eventuellement, si le chargement se fait à partir d'un ensemble cohérent d'éléments élastiques, tel que celui représenté à la figure 2b, que ce dernier soit disposé ou non dans une magasin de chargement, c'est bien au cours de cette première partie de la rotation que l'élément élastique 1 à poser est séparé de l'ensemble cohérent d'éléments élastiques.

Cette étape constitue donc une première étape du procédé de pose de l'élément élastique 1.

La figure 6 montre le dispositif de pose dans la position de pose de l'élément élastique 1 autour de l'ensemble 2a,2b.

Le passage de l'état du dispositif représenté à la figure 5 à l'état du dispositif représenté à la figure 6 est obtenu par la deuxième partie de la rotation du bras supérieur 4 autour de l'axe A dans le sens R, et, simultanément, par la deuxième partie de la rotation des bras inférieurs 6 et 7 autour de l'axe A dans le sens R' inverse du sens R.

C'est bien dans cette deuxième partie de la rotation que l'extrémité 4a du bras supérieur 4 d'une part, et les extrémités respectives 6a et 7a des bras inférieurs 6 et 7 d'autre part, se rapprochent les unes de l'autre, jusqu'à ce que l'extrémité 4a du bras supérieur 4 passe entre les extrémités respectives 6a et 7a des bras inférieurs 6 et 7. Ainsi, l'élément élastique 1 encercle l'ensemble 2a,2b, ce qui constitue une deuxième étape du procédé de pose de l'élément élastique 1 de l'invention.

Puis, la tête de l'élément élastique 1 est contrainte à passer, par déformation, dans sa boucle fermée pour réaliser la fermeture de l'encerclement, ce qui constitue une troisième étape du procédé de pose de l'élément élastique 1 de l'invention.

Compte tenu des propriétés élastiques du matériau utilisé pour l'élément élastique 1, sa tête va bien pénétrer dans la boucle fermée. Eventuellement, pour favoriser ce passage de la tête dans la boucle fermée, la distance entre l'extrémité 4a du bras supérieur 4 et l'axe A peut être inférieure à la distance entre les extrémités respectives 6a et 7a des bras inférieurs 6 et 7 et cet axe A, comme déjà expliqué plus haut.

La figure 7 représente enfin le dispositif de pose, après la pose de l'élément élastique 1 autour de l'ensemble 2a,2b, et alors que les bras supérieur 4 et inférieurs 6 et 7 ont commencé leur rotation dans le sens inverse pour décrocher respectivement la portion supérieure 1f et la portion inférieure 1g de l'élément élastique 1, et pour revenir à leur position initiale.

Ce retour à la position initiale est obtenu par relâchement de la gâchette 13 des figures précédentes (non représentée à la figure 7), et favorisé par le ressort 14a des figures précédentes (non représenté à la figure 7).

On voit bien que la forme de la tête 1b de l'élément élastique 1, qui joue le rôle d'ancre, permet effectivement un ancrage, et donc assure un encerclement durable de l'ensemble 2a,2b, après que les bras supérieur 4 et inférieurs 6 et 7 ont relâché l'élément élastique 1 qui, donc, se resserre.

Ainsi, le dispositif est le procédé de pose de l'élément élastique 1 permettent avantageusement de poser rapidement, simplement et automatiquement un grand nombre d'éléments élastiques de fixation, notamment pour la fixation d'un sarment de vigne sur un fil métallique support. Ce dispositif et ce procédé de pose permettent en effet d'amener sans effort, rapidement et facilement l'élément élastique 1 étiré autour de l'ensemble 2a,2b puis d'encercler celui-ci jusqu'à fermeture fiable et durable en relâchant l'étirement sur l'élément élastique 1.

## Revendications

1. Ensemble cohérent comprenant au moins deux éléments élastiques (1,1') de fixation comprenant chacun une boucle fermée (1a), une tête (1b) et un cou (1c) reliant ladite tête (1b) à ladite boucle fermée (1a), ladite tête (1b) étant prolongée par une excroissance supérieure (1d), lesdits éléments élastiques (1,1') étant reliés entre eux par une première liaison au niveau de leurs dites excroissances supérieures (1d,1d') respectives, leurs dites boucles fermées (1a,1a'), leurs dites têtes (1b, 1 b') et leurs dits cous (1c,1c') respectifs n'étant pas reliés entre eux, **caractérisé en ce que** chacune desdites boucles fermées (1a) est prolongée par une excroissance inférieure (1e), et lesdits éléments élastiques (1,1') sont reliés entre eux par une deuxième liaison au niveau de leurs dites excroissances inférieures (1e,1e') respectives.

2. Ensemble cohérent selon la revendication 1, **caractérisé en ce que** au moins une desdites première et deuxième liaisons est une liaison partielle.

3. Ensemble cohérent selon la revendication 2, **caractérisé en ce que** ladite liaison partielle est rendue partielle par l'intermédiaire d'une prédécoupe, de façon à faciliter la séparation ultérieure desdits éléments élastiques (1,1') par déchirement au niveau de cette dite liaison partielle.

4. Ensemble cohérent selon l'une quelconque des revendications 1 à 3, **caractérisé en ce que** ladite excroissance inférieure (1e) est diamétralement opposée à ladite excroissance supérieure (1 d).

5. Ensemble cohérent selon l'une quelconque des revendications 1 à 4, **caractérisé en ce que** les éléments élastiques (1,1') sont en caoutchouc.

## Claims

1. A coherent arrangement comprising at least two elastic securing elements (1, 1') with each of said elements including a closed loop (1a), a head (1b) and a neck (1c) connecting said head (1b) to said closed loop (1a), where said head (1b) is extended by a top stub (1d), where said elastic elements (1, 1') are connected together by a first link at the position of their said respective top stubs (1d, 1d'), and where their respective said closed loops (1a, 1a'), said heads (1b, 1b'), and said necks (1c, 1c') are not connected together, said coherent arrangement being **characterised in that** each of said closed loops (1a) is extended by a bottom stub (1e), and said elastic elements (1, 1') are connected together by a second link at the position of their respective said bottom stubs (1e, 1e').

2. A coherent arrangement according to claim 1, **characterised in that** at least one of said first and second links is a partial link.

3. A coherent arrangement according to claim 2, **characterised in that** said partial link is rendered partial by means of a weakening element, so as to facilitate the later separation of said elastic elements (1, 1') by a tearing action at the position of this said partial link.

4. A coherent arrangement according to any one of claims 1 to 3, **characterised in that** said bottom stub (1e) is diametrically opposite to said top stub (1d).

5. A coherent arrangement according to any one of claims 1 to 4, **characterised in that** the elastic elements (1, 1') are made of rubber.

## Patentansprüche

1. Kohärente Anordnung, umfassend wenigstens zwei elastische Befestigungselemente (1,1'), jedes umfassend eine geschlossene Öse (1a), einen Kopf (1 b) und einen Hals (1c), der den Kopf (1 b) mit der geschlossenen Öse (1 a) verbindet, wobei der Kopf (1 b) durch einen oberen Vorsprung (1 d) verlängert ist, wobei die elastischen Elemente (1,1') durch eine erste Verbindung auf Höhe ihrer jeweiligen oberen Vorsprünge (1d,1d') miteinander verbunden sind und wobei ihre geschlossenen Ösen (1a,1a'), ihre Köpfe (1b,1b') und ihre Hälse (1c,1c') jeweils nicht miteinander verbunden sind,
**dadurch gekennzeichnet, daß**
jede der geschlossenen Ösen (1a) durch einen unteren Vorsprung (1e) verlängert ist und daß die elastischen Elemente (1,1') durch eine zweite Verbindung auf Höhe ihrer jeweiligen unteren Vorsprünge (1e,1e') miteinander verbunden sind.

2. Kohärente Anordnung nach Anspruch 1, **dadurch gekennzeichnet, daß** wenigstens eine von der ersten und zweiten Verbindung eine partielle Verbindung ist.

3. Kohärente Anordnung nach Anspruch 2, **dadurch gekennzeichnet, daß** die partielle Verbindung mittels eines Vorschnitts erzeugt wird, um die weitere Trennung der elastischen Elemente durch Reißen auf der Höhe dieser partiellen Verbindung zu vereinfachen.

4. Kohärente Anordnung nach einem der Ansprüche 1 bis 3, **dadurch gekennzeichnet, daß** der untere Vorsprung (1 e) dem oberen Vorsprung (1 d) diametral gegenüberliegt.

5. Kohärente Anordnung nach einem der Ansprüche 1 bis 4, **dadurch gekennzeichnet, daß** die elastische Elemente (1,1') aus Gummi sind.
